(19) Europäisches Patentamt

European Patent Office

Office européen des brevets

(11) EP 0 478 846 B1

(12) EUROPÄISCHE PATENTSCHRIFT

(45) Veröffentlichungstag und Bekanntmachung des Hinweises auf die Patenterteilung:
12.03.1997 Patentblatt 1997/11

(51) Int. Cl.$^6$: **A01N 27/00**, A01N 31/06, A01N 35/06

(21) Anmeldenummer: 90201934.8

(22) Anmeldetag: 07.07.1990

(54) **Verwendung von natürlichen-naturidentischen Stoffen zum Vertreiben von Ameisen**

Use of natural or identical-to-nature substances as ant repellants

Utilisation de substances naturelles - nature-identique, pour repousser les fourmis

(84) Benannte Vertragsstaaten:
AT BE CH DE ES FR GB IT LI NL

(43) Veröffentlichungstag der Anmeldung:
08.04.1992 Patentblatt 1992/15

(73) Patentinhaber: Karg, Jörn E.
D-67661 Kaiserslautern (DE)

(72) Erfinder: Karg, Jörn E.
D-67661 Kaiserslautern (DE)

(56) Entgegenhaltungen:
DE-A- 534 856          FR-A- 733 563
US-A- 4 891 222

• DERWENT CENTRAL PATENT INDEX, BASIC ABSTRACTS JOURNAL, Schnitt C:AGDOC, Woche 9016, 13. Juni 1990, Derwent Publications Ltd, Londen, GB; & JP-A-02 067 202 (IWASE COSFA K.K.) 070390.
• DERWENT CENTRAL PATENTS INDEX, BASIC ABSTRACTS JOURNAL, Schnitt C:AGDOC, Woche 9002, 7. März 1990, Derwent Publications Ltd, Londen, GB; & JP-A-01 294 601 (MIKASA KAGAKU KOGYO K.K.) 28-11-1990
• DERWENT CENTRAL PATENTS INDEX, BASIC ABSTRACTS JOURNAL, Schnitt C:AGDOC, Woche C38, 12. November 1980, Derwent Publications Ltd, Londen, GB; & JP-A-55 104 202 (Y. SATO) 09-08-1980
• CHEMICAL ABSTRACTS, Band 86, Nr. 23, 6. Juni 1977, Seite 298, Zusammenfassung Nr. 168192p, Columbus, Ohio, US; N. HAYASHI et al.: "The trail and alarm pheromones of the ant, Pristomyrmex pungens Mayr", & EXPERIENTIA 1977, 33(4), 424-5

## Beschreibung

Die Ameisenmittel, die heute bekannt und im Handel sind, gelten als gesundheitsschädliche Stoffe - Gifte.

Hierbei im besonderen:

1. Bromophos

Common name für das als Berührungs- und Fraßgift wirkende Insektizid O-(4 Brom-2,5-dichlorphenyl)-O, O-dimethylfuiophosphat. ($C_8H_8BrCl_2O_3PS$)

2. Phoxim

Common name für das als Fraß- und Kontaktgift wirksame Insektizid O,O-Diethyl-O-(alpha-cyanobenzylidenamino)-fuionophoshat. $(H_5C_2O)_2P(S)$-O-N=C(CN)-$C_6H_5$.

## GIFTE

1. Propetamphos

Commen name für das als Cholinesterase-Hemmer wirkende Insektizid Ethylamino-(E)-O-(2-isopropoxycarbonyl-1-methylvinyl)-O-methyl-fuiophosphat. $C_{10}H_{20}NO_4PS$.

Zur Bekämpfung der Ameisen mit Insektiziden eignen sich neben den früher verwendeten chlorhaltigen Mittel, die Lindan, Dichlorvos, Propoxur oder Trichlorfon enthalten und die in Pulverform oder in Wasserlösungen eingesetzt werden.

Neben den ausgewiesenen Bedenken sind sie auch nur beschränkt einsatzfähig, da sie wasserlöslich sind und somit von Pflanzen aufgenommen werden.

Hinzu kommt noch die Giftigkeit für Fische und Fischnährtiere.

Ein weiterer Punkt ist die Bienengefährlichkeit (vgl. Bienenschutzverordnung vom 19. 12. 1972).

Die Erfindung betrifft die im folgenden aufgeführten natürlichen und naturidentischen Stoffe. Diese haben die negativen Eigenschaften der bekannten Insektizide nicht und sind auch praktisch nicht wasserlöslich

## BORNEOL (Borneocampher) - Isoborneol

(1,7,7-Trimethylbicyclo-1,2,2,-)heptanol (2) wird für Rosmarin, Lavendel und Tannenduft in der Parfümerie eingesetzt. Ebenso als "Weihrauch" in den buddhistischen Kulturen.

Natürlicher Inhaltsstoff von:
Muskatnuß, Karotte, Citrusfrüchten, Heidelbeeren, Erdbeere, Zimt, Ingwer, Pfefferminz, Pfeffer, Thymian, Hopfenöl, Apfelbranntwein, Kakao, Schinken, Origanum, Koriander, Gin, fermentiertem Sojahydrolysat und Baldrianöl.

## CAMPHEN

Natürlicher Inhaltsstoff von:
Aprikose, Citrusfrüche, Heidelbeere, Johannisbeere, Karotte, Sellerie, Anis, Zimt, Ingwer, Pfefferminz, Muskatnuß, Pfeffer, Petersilie, Thymian, Käse, Speck (geröstet), Origanum, Mango, Kardamom, Koriander, Gin, Karottensamen, Kalmus, Wacholderbeeren.
Die d-Form in:
Cypressen-, Campher- und Spiköl, die l-Form im amerikanischen und russischen Terpentinöl.

## "PYROGENE" KIESELSÄURE

von über 99,8% SiO -Gehalt oder deren Derivate. Die Verwendung als Füllstoff für Naturprodukte und Rieselhilfe für zum Klumpen neigende Stoffe (z.B. Salz, Gewürzmischungen u.a.) ist bekannt und gesetzlich erlaubt.

Der Einsatz für Ameisenmittel ist nicht bekannt und dient im Besonderen der großflächigen Verteilung der aufgeführten natürlichen und naturidentischen Stoffe, um erst dadurch die vorteilhafte Vertreibung der Ameisen zu erreichen.

Kieselsäure ist bekanntlich auch nicht praktisch wasserlöslich. Es war also nicht vorauszusehen, daß Mischungen und/oder die aufgeführten Stoffe einzeln mit Kieselsäure, bedingt nach einfachem Rühren im Wasser, eine Verteilung erreichen und somit dann erst als Gießmittel und/oder Streumittel gegen Ameisen verwendet werden können. Borneol - Isoborneol, Menthol, Kieselsäure selbst, schwimmt im Wasser sofort an die Oberfläche.

| Beispiel 1 | |
|---|---|
| 5 % | Kieselsäure |
| 1 % | Pfefferminzöl (60% Menthol) |
| 80 % | Borneol |
| 14 % | Isoborneol |
| 100 % | |

| Beispiel 2 | |
|---|---|
| 25 % | Kieselsäure |
| 10 % | Camphen |
| 65 % | Borneol-Isoborneol (75%ig/15%ig) |
| 100 % | |

Durch die Vermahlung Von den aufgeführten natürlichen - naturidentischen nicht wasserlöslichen Stoffen wird eine bedingte gute Verteilung im Wasser erreicht und somit die Eignung als Ameisengießmittel erfüllt und eine sofortige Entmischung vermieden, die sonst einen wirkungsvollen Einsatz verhindern würde.

Weiterhin ist die Mischung ausgezeichnet als Streumittel einsetzbar. Die Vertreibung der Ameisen erfolgt total nach ca. 24 Std.

## Patentansprüche

1. Die Verwendung für ein natürliches-naturidentisches Ameisenmittel ist gekennzeichnet durch

   a) Camphen
   b) Borneol
   c) Isoborneol

   im einzelnen oder in Mischungen aus 1a - 1c.

2. Die Verwendung nach Anspruch 1, unter Berücksichtigung der natürlichen Ursprungsderivate, in denen bis zu 35 % enthalten sind.

3. Verwendung nach Anspruch 1 und/oder 2, unter Zugabe, Vermahlung und Mischung von Kieselsäure.

## Claims

1. The usage for a natural/nature-identical ant killer is characterised by

   a) Camphene
   b) Borneol
   c) Isoborneol

   These are used either individually or in combination.

2. The usage in accordance with claim 1, taking into account the natural original derivatives, in which up to 35 % are included.

3. The usage in accordance with claim 1 and/or 2, with the addition, blending and mixing of silicic acid.

## Revendications

1. L'utilisation dans un moyen anti-fourmis naturel/identique à la nature est

   a) camphène
   b) bornéol
   c) isobornéol

   utilisés un per un ou en mélanges de 1a - 1c.

2. L'utilisation selon la revendication 1, en tenant compte des dérivés d'origine naturels, contenant jusqu'à 35 %.

3. L'utilisation selon les revendications 1 et/ou 2, en rajoutant, broyant et mélangeant de l'acide silicique.